# EUROPÄISCHE PATENTSCHRIFT

(11) **EP 0 809 086 B1**
(45) Veröffentlichungstag und Bekanntmachung des Hinweises auf die Patenterteilung: **27.02.2002**
(21) Anmeldenummer: 97106227.8
(22) Anmeldetag: 16.04.1997
(51) Int. Cl.: G01B 5/00

(54) **Vorrichtung zur Abstimmung von Fahrzeugteilen**
Positioning device for parts of motor vehicles
Dispositif de positionnement de parties d'automobiles

(30) Priorität: 21.05.1996 DE 19620465
(43) Veröffentlichungstag der Anmeldung: 26.11.1997
(73) Patentinhaber: Bayerische Motoren Werke Aktiengesellschaft, 80788 München (DE)
(72) Erfinder: Treptow, Norbert, 85305 Jetzendorf (DE); Hufschmid, Hans-Peter, 85656 Buch am Buchrain (DE); Berthold, Klaus, 85521 Ottobrunn (DE)

(56) Entgegenhaltungen:
- DE-A- 4 034 770
- DE-A- 4 408 038
- DE-U- 8 609 807
- GB-A- 2 175 239

## Beschreibung

Die Erfindung bezieht sich auf eine Vorrichtung und ein Verfahren zur Abstimmung von Fahrzeugteilen nach dem Oberbegriff der Ansprüche 1 und 13.

Aus der DE 44 08 038 A1 ist eine Vorrichtung zur Abstimmung von Fahrzeugteilen, d. h. von Karosserie- und/oder Ausstattungsteilen, bekannt, bei der auf einen Grundrahmen mit Querträgem mehrere Befestigungseinrichtungen angeordnet sind. Die Befestigungseinrichtungen bestehen aus einem höhenverstellbaren und verdrehbaren Befestigungsfuß (Ständerabschnitt), der über zwei Schlitten mit Schwalbenschwanzführungen auch in Längs- und Querrichtung einstellbar ausgebildet ist. Im oberen Bereich der Befestigungseinrichtung ist ein Adapter mit einem Aufnahmedorn vorgesehen, wobei der Aufnahmedorn in entsprechende lochförmige Aufnahmen des Fahrzeugteiles eingreift und beispielsweise mittels einer Spannvorrichtung in Form einer Rändelschraube festgespannt werden kann.

Die Befestigungseinrichtungen der bekannten Abstimmvorrichtung sind sehr aufwendig gestaltet. Durch die doppelte Schwalbenschwanzführung, die Höhenverstellbarkeit, Verdrehbarkeit und Schwenkbarkeit des Adapters sind zwar vielfältige Anpassungsmöglichkeiten gegeben, aber gleichzeitig ist der Einstellaufwand sehr hoch. Die Befestigungseinrichtungen sind teuer und schwer. Die Abstimmvorrichtung ist nur für Karosserie- und Ausstattungsteile konzipiert, so daß sie erst in einem relativ späten Stadium der Fahrzeugentwicklung einsetzbar ist.

Aufgabe der Erfindung ist es, die bekannte Abstimmvorrichtung weiterzubilden. Insbesondere soll eine verbesserte Handhabung bei kürzeren Rüstzeiten erreicht werden. Die Vorrichtung soll kostengünstiger herzustellen und auch für kleinere Fahrzeugteile einsetzbar sein. Darüber hinaus soll die Vorrichtung bereits in einem frühen Stadium der Fahrzeugentwicklung eingesetzt werden können, um die Gesamtdauer des Entwicklungszyklus für ein neues Fahrzeug verkürzen zu können.

Diese Aufgabe wird durch die Merkmale der Ansprüche 1 und 13 gelöst.

Durch die in Anspruch 1 realisierte Grundidee, mit zusätzlichen Verbindungsteilen einen Querversatz der Adapter in einer Ebene senkrecht zum Befestigungsfuß zu erreichen, werden die beiden Schwalbenschwanzführungen aus der DE-A1-4 408 038 ersetzt. Hierdurch ergibt sich eine deutliche Vereinfachung der Befestigungseinrichtung. Die erfindungsgemäßen Befestigungseinrichtungen sind somit deutlich kostengünstiger und bauen kleiner. Sie zeichnen sich durch geringeres Eigengewicht aus und können mit geringeren Abständen zueinander am Grundrahmen angebracht werden, wodurch auch kleinere Bauteile nebeneinander befestigt werden können (beispielsweise Scheinwerfer / Frontverkleidung). Mit den erfindungsgemäßen Verbindungsteilen können auch schwer erreichbare Stellen der Fahrzeugteile angebunden werden. In der Regel sind die Verbindungsteile zweidimensional gestaltet, da die dritte Raumrichtung durch die Längserstreckung des Befestigungsfußes abgedeckt wird. Es sind jedoch auch dreidimensional geformte Verbindungsteile möglich, insbesondere um schwer erreichbare Stellen der Fahrzeugteile anbinden zu können. Außerdem wird ein Spiel in der Aufspannung, wie es sich nach dem Stand der Technik unter Belastung an den Schlittenführungen einstellen kann, durch die Verbindungsteile verhindert.

Die erfindungsgemäße Vorrichtung läßt sich sowohl für das Außen- als auch das Innencubing einsetzen, das heißt, es können sowohl Teile der Fahrzeugaußenhaut (Karosserieteile, Anbauteile wie Leuchten, etc.) als auch Teile des Fahrzeuginterieurs (Instrumententafel, Türinnenverkleidung, Hutablage, etc.) mit den benachbarten Fahrzeugteilen abgestimmt werden.

Befestigungsfuß und/oder Verbindungsteil und/oder Adapter können einstückig ausgebildet sein. Besondere Vorteile hinsichtlich des universellen und flexiblen Einsatzes der erfindungsgemäßen Abstimmvorrichtung ergeben sich jedoch, wenn die genannten Komponenten nach Art eines Baukastensystems jeweils getrennt ausgebildet sind.

Durch die universellen Einsatzmöglichkeiten der erfindungsgemäßen Abstimmvorrichtung kann diese für unterschiedliche Fahrzeugvarianten oder Fahrzeugtypen flexibel eingesetzt werden. Durch die Wiederverwendbarkeit der Abstimmvorrichtung werden die Kosten gesenkt und die Umweltbelastung reduziert.

Durch die Weiterbildung der Erfindung nach Anspruch 2 kann die Anzahl der Befestigungseinrichtungen reduziert werden. Hieraus ergibt sich eine deutliche Gewichts- und Kostenersparnis. Alternativ kann die Anzahl der Anbindungspunkte erhöht werden, um eine gleichmäßige Aufspannung der Fahrzeugteile zu erreichen. Außerdem können im Unterschied zur eingangs genannten DE-A1-4 408 038 die Anbindungspunkte deutlich enger zusammenrücken.

Durch die Erfindung wird durch besonders gestaltete und maßlich exakte Verbindungsteile das Raster des Grundrahmens beibehalten. Somit befinden sich die Mittelpunkte der Adapter immer in einem festen Rastermaß, beispielsweise einem 100 mm-Raster. Auf diese Weise kann mit einem entsprechenden Sortiment verschiedener Verbindungsteile eine Anbindung an jeden beliebigen festen Punkt des Rasters erzielt werden. Hierdurch ergibt sich ein durchgängiges Konzept, bei dem die Fahrzeugteile mit Aufnahmen ausgestattet werden können, die ausschließlich an den Punkten eines Netzgitters angeordnet sind. Durch die festgelegte Lage der Aufnahmepunkte an den Fahrzeugteilen können die Fahrzeugteile beliebig austauschbar an unterschiedlichen erfindungsgemäßen Vorrichtungen gemäß Anspruch 3 angebracht werden. Auch ist eine erfindungsgemäße Aufspannung der Fahrzeugteile zur Bearbeitung mit einer Werkzeugmaschine im direkten Wechsel möglich, wenn der Werkzeugmaschine eine Aufspannplatte mit entsprechenden Raster zugeordnet ist.

Durch das Baukastensystem nach Anspruch 3 ist es möglich, den Abstand zwischen Grundrahmen und Fahrzeugteil einzustellen. In der Regel sind für die Befestigungsfüße weiter auseinanderliegenden maßliche Abstufungen vorgesehen, während mit der Dicke der Adapter die Feineinstellung vorgenommen wird.

Durch die formschlüssige Verbindung zwischen dem Befestigungsfuß und dem Verbindungsteil (Anspruch 4) ist eine Positionierung des Vebindungsteils nur in einer oder in mehreren vorgegebenen Lagen möglich. So können die formschlußerzeugenden Einrichtungen eine Ausrichtung der Verbindungsteile beispielsweise nur in Längs- oder nur in Längs- und Querrichtung des Rasters ermöglichen. Analog ist auch eine Ausrichtung unter 45 ° zum Raster des Grundrahmens möglich. Durch dieses Baukastensystem wird gewährleistet, daß jeder Rasterpunkt exakt, reproduzierbear und ohne Einstellarbeiten und Einstellinstrumente (Winkellehre, Wasserwaage etc.) erreicht werden kann. Die genaue Einhaltung dieses Rastermaßes ist in besonderer Weise für die Aufspannung des Fahrzeugteils zur Bearbeitung mit einer Werkzeugmaschine von Bedeutung.

In gleicher Weise ermöglicht auch die Formschlußverbindung zwischen Verbindungsteil und Adapter (Anspruch 5) eine gleichbleibende rasterkonforme Verbindung. In der Regel handelt es sich hierbei dem Wesen nach um eine Zentrierung des Adapters auf dem Verbindungsstück.

Durch die Ausgestaltung der Erfindung nach Anspruch 6 ist eine schnelle Montage und Demontage der Fahrzeugteile möglich, wodurch kurze Rüstzeiten bei gleichzeitig hoher Flexibilität erreicht werden. Durch die Verrastung sind die Fahrzeugteile zusätzlich in Montage- bzw. Demontagerichtung arretiert, so daß auch bei horizontal gerichteten Befestigungsfüßen eine sichere Befestigung der Fahrzeugteile möglich ist.

Die Verschraubung nach Anspruch 7 ermöglicht die Einleitung von Kräften in das Fahrzeugteil, wie sie beispielsweise bei der Aufspannung der Fahrzeugteile zur Bearbeitung mit einer Werkzeugmaschine auftreten. Die Verschraubung kann zusätzlich wahlweise zur Verrastung vorgesehen sein und erübrigt sich im Falle der Befestigung der Fahrzeugteile rein zu Abstimmungszwecken.

Der Stift an der Aufnahme nach Anspruch 8 ermöglicht eine optimale Zentrierung der Fahrzeugteile. Im Gegensatz zu den Aufnahmeöffnungen im Fahrzeugteil gemäß der eingangs genannten DE-A1-4 408 038 sind bei der erfindungsgemäßen Weiterbildung keine Freiräume am Fahrzeugteil für das Eindringen eines Aufnahmedornes erforderlich.

Durch die Aufspaltung der Aufnahme in ein Anlageteil am Fahrzeugteil und ein daran anschraubbares Aufnahmeteil (Anspruch 9) wird eine weitere Erhöhung der Flexibilität der erfindungsgemäßen Vorrichtung erreicht. Die Anlageteile können als einheitlich geformte "Normteile" an verschiedenen Stellen der Fahrzeugteile angebracht werden.

Während der bekannte Grundrahmen der DE-A1-4 408 038 dem Grunde nach eine zweidimensionalen "Meßplatte" darstellt, auf der ausschließlich vertikal ausgerichtete Befestigungseinrichtungen aufgespannt sind, beschreibt die- Weiterbildung der Erfindung nach Anspruch 10 horizontale und vertikale Befestigungsebenen, auf denen entsprechend vertikal bzw. horizontal abstehende Befestigungseinrichtungen aufgesetzt werden können. Damit ist es möglich, die Fahrzeugteile nicht nur "von unten her" abzustützen, sondern neben Bodengruppen auch Fahrzeugteile wie Kotflügel, Seitenwände etc. an der Abstimmvorrichtung anzubringen. Während bei der aus dem Stand der Technik bekannten Abstimmvorrichtung der Schwerpunkt auf einer Vermessung der Fahrzeugteile liegt, wird mit der Erfindung eine Abstimmung der Fahrzeugteile untereinander angestrebt. Durch das Aneinanderordnen von "vertikalen" und "horizontalen" Fahrzeugteilen können die Spaltmaße sowie das gesamte Erscheinungsbild aneinandergrenzender Fahrzeugteile, unter Umständen eines gesamten Fahrzeugs, beurteilt werden. Die erfindungsgemäße Vorrichtung eignet sich gleichermaßen für Blech- und Ausstattungsteile sowohl an der Außenseite als auch an der Innenseite von Kraftfahrzeugen. Damit kann die Vorrichtung sowohl für das Außen- auch als das Innencubing eingesetzt werden.

Bei einem quaderförmigen Aufbau des Grundrahmens (Anspruch 11) kann das Fahrzeug um den Rahmen herum aufgebaut werden.

Besondere Vorteile ergeben sich, wenn gemäß Anspruch 13 die Abstimmvorrichtung zur Abstimmung von Modellen der Fahrzeugteile verwendet wird. Bekannte Abstimmvorrichtungen für Modelle von Fahrzeugteilen sind äußerst massiv im Aufbau und weisen ein entsprechend hohes Gewicht auf. Sie sind in der Regel nur stationär einsetzbar und eignen sich nur für einen Fahrzeugtyp. Wird gemäß Anspruch 13 die flexible Abstimmvorrichtung auch für Modelle eingesetzt, so kann die Vorrichtung bereits in der Designabteilung eines Fahrzeugherstellers, das heißt, in einem sehr frühen Stadium der Formfindung der Außenhautteile oder der Innenausstattung, verwendet werden. Anschließend kann die Abstimmvorrichtung zum Zwecke des Cubing mit Modellen bestückt werden. Existieren von den Modellen werkzeugfallende Teile, so können diese, wie bereits aus der DE-A1-4 408 038 bekannt, in der Abstimmvorrichtung vermessen werden. Auch ist ein direkter Austausch eines Modells gegen das entsprechende Fahrzeugteil möglich, um die Maß- und Konturgenauigkeit unmittelbar vergleichen zu können. Letztendlich kann die Abstimmvorrichtung zum Zwecke der Qualitätskontrolle auch während der laufenden Serienfertigung der Fahrzeugteile eingesetzt werden.

Durch die erfindungsgemäß erweiterte Einsatzmöglichkeit einer flexiblen Abstimmvorrichtung auch für Modelle der Fahrzeugteile ergibt sich eine spürbare Beschleunigung des Entwicklungsprozesses für ein neues Fahrzeug. Ein und dieselbe Vorrichtung kann sowohl für Modelle als auch für Blechteile verwendet werden. Die Modelle bestehen hierbei aus einer Tragstruktur, die die Anbindung an die Abstimmvorrichtung vornimmt sowie aus einer außenliegenden Schicht aus Modellwerkstoff, die entsprechend der gewünschten Endform der Fahrzeugteile bearbeitet wird. Unter Verwendung derselben Aufnahmen wie bei den Fahrzeugteilen können die Modelle in der gleichen Weise schnell in eine Abstimmvorrichtung eingesetzt und wieder demontiert werden. Hierdurch ergeben sich kurze Rüstzeiten. Durch Anpassung der Befestigungseinrichtungen können Modelle verschiedener Fahrzeugteile, auch unterschiedlicher Fahrzeuge, in ein und dieselbe Abstimmvorrichtung eingesetzt werden.

Bei der herkömmlichen Modelltechnik des Außen- und Innencubing werden auf eine steife metallische Tragstruktur, die zur flächigen Befestigung an einem Grundrahmen ausgebildet ist, quaderförmige Blöcke aus Modellwerkstoff in unterschiedlichen Größen und Formen so aufgeklebt, daß in grober Annäherung die gewünschte Kontur des Fahrzeugteils entsteht. Anschließend wird der Modellwerkstoff bearbeitet, um die gewünschte Oberfläche zu erreichen. Nachteilig bei diesen Verfahren sind das hohe Gewicht der Modelle, der große Materialaufwand, das schlechte Handling und die eingeschränkte Verwendbarkeit der Modelle für nur einen Fahrzeugtyp. Demgegenüber schlägt Anspruch 14 vor, Modelle aus einer leichten und trotzdem sehr steifen Tragstruktur aufzubauen und diese in individuell einstellbare Abstimmvorrichtungen einzusetzen. Die Tragstruktur ist mit Aufnahmen in einem festen Rastermaß versehen. In besonderer Weise wird die Verwendung von Abstimmvorrichtungen gemäß der Ansprüche 1 bis 12 vorgeschlagen, da hiermit eine große Variabilität erreicht wird.

Durch die Sandwichbauweise gemäß Anspruch 14 weisen die Modelle ein sehr geringes Gewicht bei hoher Stabilität auf. Die Abstandsschicht wird beispielsweise von einem Abstandsgewebe mit wabenförmiger Struktur gebildet, das zwischen die beiden Kohlefaserschichten eingelegt wird und sich unter der Einwirkung von Harz in Richtung senkrecht zu den Kohlefaserschichten ausdehnt. Zusätzlich können Verstärkungseinlagen, beispielsweise in Form von CFK-Rohren, zwischen den beiden Kohlefaserschichten angeordnet werden. Durch die Verbundbauweise ergibt sich eine äußerst steife und maßhaltige Tragstruktur, auf die der Modellwerkstoff aufgetragen wird. Besonders vorteilhaft ist es hierbei, den Modellwerkstoff auf die Tragstruktur aufzuspritzen. Als Modellwerkstoffe hierfür kommen zum Beispiel das Material Ureol der Firma Ciba Geigy bzw. das Material Sika der Firma Sika in Frage. Die genannten Materialien werden bevorzugt mit einer Schichtdicke von ca. 30 mm aufgetragen, wodurch sich ein guter Kompromiß zwischen verfügbarer Materialdicke für die spanende Bearbeitung und Eigengewicht der Modelle ergibt.

Anspruch 15 gibt ein weiteres Beispiel für den Aufbau eines Modells für ein Fahrzeugteil. So kann auf ein Aluminium-Lochblech mit innenseitig aufgesetzten Verstärkungsprofilen ein Modellwerkstoff aufgespritzt und anschließend spanend bearbeitet werden. Auf der dem Modellwerkstoff abgewandten Außenseite des Lochbleches werden die Aufnahmen für die Adapter angeordnet.

Durch die beschriebene Modelltechnik ergibt sich eine Reihe von Vorteilen: Die Modelle können ebenso wie die Fahrzeugteile von der Abstimmvorrichtung in einfacher Weise abgenommen und im Fall von kleineren Bauteilen, wie beispielsweise dem Modell eines Scheinwerfers oder eines Kotflügels, problemlos von einer Person getragen werden. Somit ist ein einfaches Handling der Modelle zwischen Modellwerkstatt, Standort der Abstimmvorrichtung und Büro des Designers bzw. Konstrukteurs möglich. Das geringe Gewicht der Modelle ermöglicht eine vollkommen neue Arbeitsweise und einen neuen Umgang mit den einzelnen "Modellbausteinen".

Durch die Kombination variabler Abstimmvorrichtungen mit in Sandwichbauweise hergestellten Modellen ergeben sich entscheidende Vorteile hinsichtlich des Gewichtes und der Herstellkosten der Modelle. Die beschriebene Modelltechnik kann überall dort eingesetzt werden, wo die Herstellung der Werkzeuge für die Fahrzeugteile über CAD-Datensätze erfolgt und somit auf die konventionelle Technik mit "Urmodellen" verzichtet werden kann. Besondere Vorsicht und Sorgfalt ist jedoch beim Transport und der Lagerung der Modelle angeraten, um ebenso wie bei der herkömmlichen Modelltechnik die erforderliche hohe Maßgenauigkeit zu gewährleisten. Auch müssen gleichbleibende Einsatztemperaturen eingehalten werden.

Durch den Einsatz von Adaptern in abgestuften Dicken (Anspruch 12) kann ein und dasselbe Modell auch bei Änderungen der Kontur bzw. der Fahrzeugmaße weiterverwendet werden. Soll beispielsweise die Kontur eines Kotflügels (partiell) weiter in Richtung der Fahrzeugaußenseite verlegt werden, so kann durch die Verwendung eines dickeren Adapters die gesamte Kontur nach außen verschoben und anschließend in der gewünschten Weise abgefräst werden. Damit entfällt die Anfertigung eines neuen Modells. Bei ungenügender Restmaterialstärke kann umgekehrt neuer Modellwerkstoff auf die Außenseite des Modells aufgespritzt werden, wobei gleichzeitig unter Verwendung eines Adapters mit geringerer Dicke die Kontur weiter in Richtung Fahrzeugmitte zurückgenommen wird. Somit kann mit unveränderten Tragstrukturen in schneller Weise bei geringem Materialeinsatz eine Anpassung an andere Bauteilgeometrien erfolgen. Durch die Möglichkeit, an einem einzigen Modell mehrmals durch einfaches Fräsen die Kontur ändern zu können, wird der Prozeß der Formfindung für die fahrzeugteile deutlich beschleunigt. Außerdem ergeben sich niedrige Modellkosten und eine höhere Umweltfreundlichkeit durch die geringere Menge an zu entsorgendem Abfall.

Mögliche Ausführungsbeispiele der Erfindung sind nachfolgend in der Zeichnung näher dargestellt und erläutert. Es zeigt:
- Figur 1: eine perspektivische Schnittdarstellung einer erfindungsgemäßen Befestigungseinrichtung,
- Figur 2: das Befestigungsfuß von Figur 1 in der Draufsicht und im Längsschnitt,
- Figur 3: ein erstes Ausführungsbeispiel eines Verbindungsteils in der Draufsicht sowie im Längs- und Querschnitt,
- Figuren 4 bis 6: weitere Ausführungsbeispiele von Verbindungsteilen,
- Figur 7: den Adapter von Figur 1 in der Draufsicht sowie in zwei Schnittdarstellungen, zum Teil mit Rasteinrichtung und Aufnahmeteil dargestellt,
- Figur 8: das der Befestigungseinrichtung zugeordnete Aufnahmeteil in der Draufsicht und im Schnitt,
- Figur 9: das dem Modell zugeordnete Anlageteil in der Draufsicht und im Schnitt,
- Figuren 10 und 11: perspektivische Ansichten auf Nachbildungen des vorderen Fahrzeugabschnittes und
- Figur 13: eine Seitenansicht der Anbindung des Modells einer Türverkleidung.

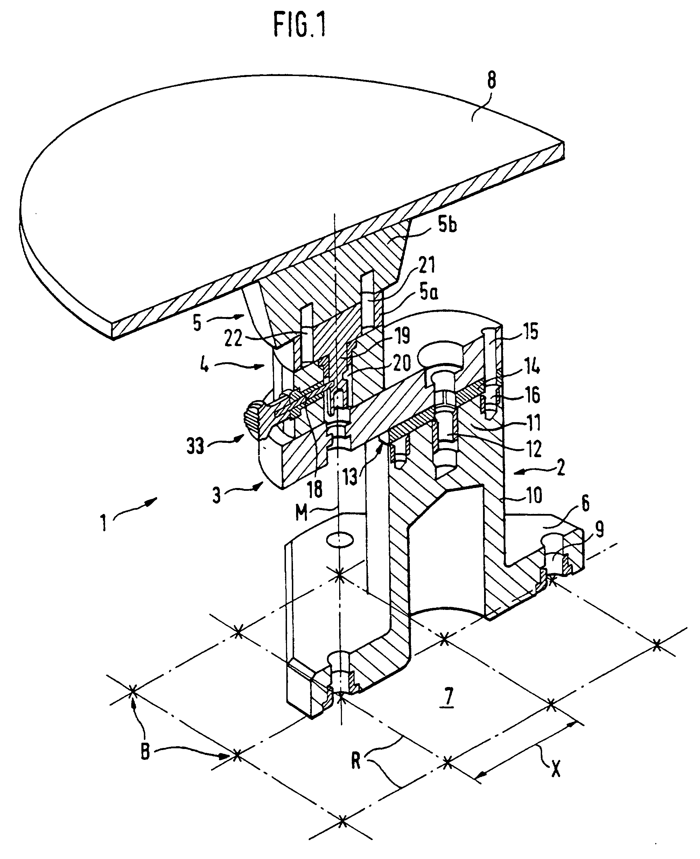

Figur 1 zeigt eine in ihrer Gesamtheit mit 1 bezeichnete Befestigungseinrichtung im Schnitt. Die Befestigungseinrichtung 1 ist bevorzugt aus Aluminium hergestellt und setzt sich aus einem Befestigungsfuß 2, einem Verbindungsteil 3, einem Adapter 4 sowie einer zweiteiligen Aufnahme 5 zusammen. Die Aufnahme 5 trägt ein nur schematisch dargestelltes Modell 8 eines Fahrzeugteils. In gleicher Weise kann selbstverständlich auch das Fahrzeugteil selbst aufgenommen werden.

Der Befestigungsfuß 2 ist mit seinem Fußteil 6 auf einen Grundrahmen 7 aufgesetzt und wird mit diesem über nicht dargestellte Schrauben, die in Durchgangsbohrungen 9 eingesetzt werden, verschraubt. An das Fußteil 6 schließt sich ein Schaft 10 an, an dessen oberseitigen Endabschnitt 11 das Verbindungsteil 3 über eine zentrale Gewindebohrung 12 angeschraubt ist. Das Verbindungsteil 3 wird über eine Formschlußverbindung, bestehend aus einer Nut 13 im Endabschnitt 11 sowie zwei Nutensteinen 14 im Adapter 4, gegenüber dem Befestigungsfuß 2 ausgerichtet.

Der Adapter 4 ist mit dem Verbindungsteil 3 verschraubt (in Figur 1 nicht dargestellt). In den Adapter 4 wiederum greift die Aufnahme 5 formschlüssig ein. Die Aufnahme 5 besteht einerseits aus einem scheibenförmigen Aufnahmeteil 5a, von dem ein Einsteckstift 19 absteht, und andererseits aus einem an das Modell 8 angeklebten Anlageteil 5b. Das Aufnahmeteil 5a wird mit seinem Stift 19 in eine zentrale Bohrung 20 des Adapters 4 eingesetzt und mit einem Rastbolzen 18 einer Rasteinrichtung 33 arretiert. Aufnahmeteil 5a und Anlageteil 5b sind über die Bohrungen 21 und 22 miteinander verbunden.

Der Grundrahmen 7 weist eine Vielzahl von Befestigungsbohrungen B auf, die regelmäßig angeordnet sind und ein Raster R bilden. Aus der Darstellung der Figur 1 geht hervor, daß sich die Mittelline M von Adapter 4 und Aufnahme 5 exakt über einer der Durchgangsbohrungen 9 des Befestigungsfußes 2 befindet. Durch das Verbindungsteil 3 wird also ein Versatz X der Mittellinie M gegenüber dem Aufspannzentrum des Befestigungsfußes 2 exakt im Rastermaß erzeugt.

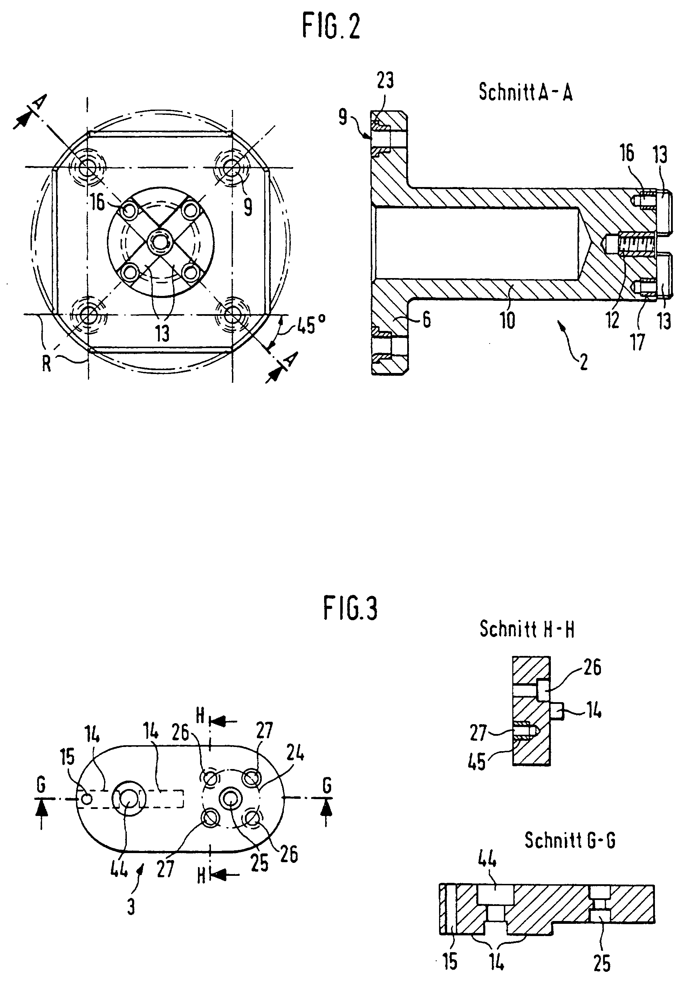

Figur 2 zeigt den Befestigungsfuß 2 im einzelnen. Die Durchgangsbohrungen 9 sind mit Paßbuchsen 23 aus Stahl versehen, um eine exakte und verschleißfeste Aufspannung des Befestigungsfußes 2 auf dem Grundrahmen 7 auch bei hoher Beanspruchung zu gewährleisten. Aus der Draufsicht der Figur 2 gehen die senkrecht zueinander verlaufenden Nuten 13 hervor, die unter 45 ° zum Raster R verlaufen. Somit können Verbindungsteile 3 nur in zwei senkrecht zueinander verlaufenden Richtungen jeweils diagonal zum Raster R auf den Befestigungsfuß 2 aufgesetzt werden. Nicht dargestellte Paßstifte, die in Durchgangsbohrungen 15 des Verbindungsteils 3 und in Sacklöcher 16 (mit Paßbuchsen 17) des Befestigungsfußes 2 eingreifen, verhindern eine Verschiebung des Verbindungsteils 3 in Längsrichtung der Nuten 13. Die kraftschlüssige Verbindung zwischen Befestigungsfuß 2 und Verbindungsteil 3 erfolgt über Verschraubung in der Gewindebohrung 12.

In Figur 3 ist ein erstes Ausführungsbeispiel eines Verbindungsteils 3 dargestellt. An die Unterseite des Verbindungsteils 3 sind zwei Nutensteine 14 angeformt, die in ihren Abmessungen den Nuten 13 des Befestigungsfußes 2 entsprechen. Die Bohrung 15 dient der Aufnahme eines Paßstiftes, um eine Verschiebbarkeit des Verbindungsteils 3 in Richtung seiner Längserstreckung zu verhindern. Über die Durchgangsbohrung 44 wird das Verbindungsteil 3 mit dem Befestigungsfuß 2 verschraubt. Die Bohrung 44 fluchtet im zusammengebauten Zustand mit der Gewindebohrung 12 des Befestigungsfußes 2. Der für die Befestigung des Verbindungsteils 3 mit dem Adapter 4 maßgebliche Teilkreis ist mit 24 bezeichnet. Im Zentrum des Teilkreises 24 ist eine Durchgangsbohrung 25 vorgesehen, die im zusammengebauten Zustand mit der zentralen Bohrung 20 im Adapter 4 fluchtet. Am Teilkreis 24 sind jeweils diagonal gegenüberliegende Durchgangsbohrungen 26 für Befestigungsschrauben sowie Sacklöcher 27 (mit Paßbuchsen 45) für Paßstifte vorgesehen.

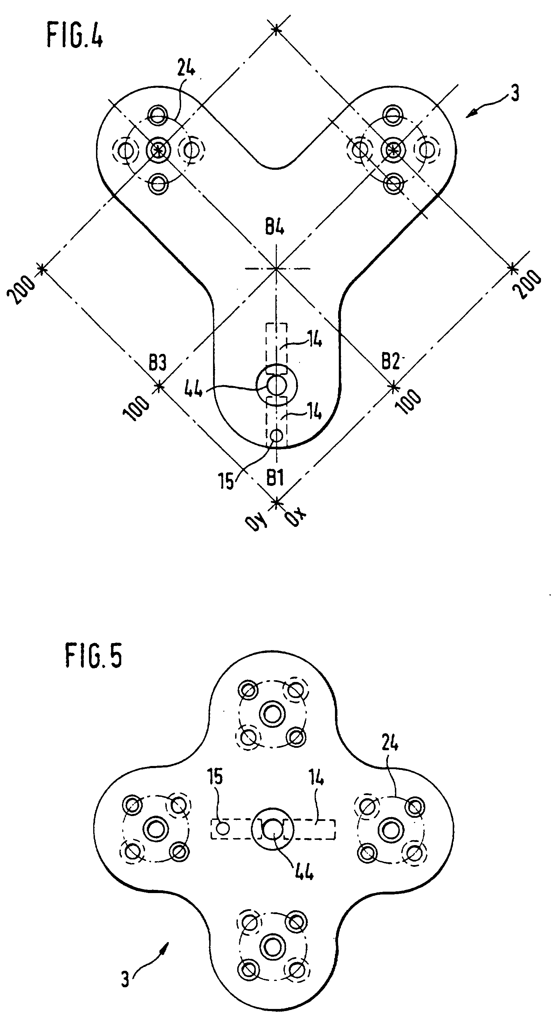

Die Figuren 4 bis 6 zeigen weitere Ausführungsformen von Verbindungsteilen 3. Alle Verbindungsteile 3 sind im Prinzip gleich aufgebaut. Sie sind jeweils mit einer Durchgangsbohrung 44 zur Anbindung an den Befestigungsfuß 2, mit zwei Nutensteinen 14 zur diagonalen Ausrichtung sowie mit einem, zwei oder vier Teilkreisen 24 für die Anbindung von ebenso vielen Adaptern 4 versehen.

Am gabelförmigen Verbindungsteil 3 der Figur 4 ist zur Verdeutlichung des Versatzes, der durch das Verbindungsteil 4 erzeugt wird, das Raster R beispielhaft bemaßt. Der Befestigungsfuß 2 ist an den vier Befestigungspunkten B1 bis B4 mit dem Grundrahmen 7 verschraubt. Durch das Verbindungsteil 3 wird für die Teilkreise 24 und damit die beiden Adapter 4 eine X/Y-Positionierung mit den Koordinaten 100/200 bzw. 200/100 erreicht.

Figur 5 zeigt ein Verbindungsteil 3 für vier Adapter 4 mit regelmäßiger Anordnung um die zentrale Durchgangsbohrung 44.

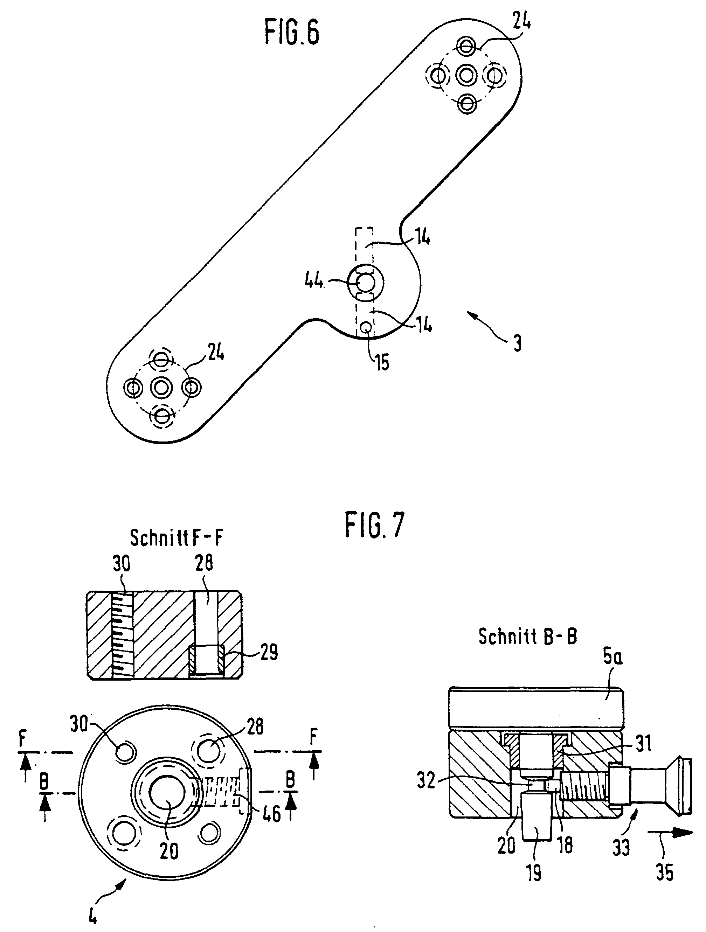

Figur 6 stellt ein Verbindungsteil 3 mit relativ großer Längserstreckung dar, so daß mit einer einzigen Befestigungseinrichtung 1 zwei entsprechend weit auseinanderliegende Aufnahmepunkte an einem Modell 8 erfaßt werden können.

Figur 7 stellt einen Adapter 4 im einzelnen dar. Der Adapter 4 ist im wesentlichen scheibenförmig aufgebaut, mit zwei jeweils diagonal gegenüberliegenden Durchgangsbohrungen 28 (mit Paßbuchsen 29) für nicht dargestellte Paßstifte bzw. gegenüberliegenden Gewindebohrungen 30. Die Bohrungen 28 und 30 des Adapters fluchten mit den entsprechenden Bohrungen 27 bzw. 26 des Verbindungsteils 3.Die zentrale Bohrung 20 ist mit einer Paßbuchse 31 verstärkt. In die Paßbuchse 31 greift der Stift 19 des Aufnahmeteils 5a ein. Der Stift 19 ist mit einer Ringnut 32 versehen, in welche die seitlich eingreifende Rasteinrichtung 33 mit ihrem Raststift 18 eingreift. Der Raststift 18 kann in Richtung des Pfeils 35 aus der Ringnut 32 herausverlagert werden. Abweichend von der Darstellung des Adapters 4 in der Draufsicht der Figur 7 können mehrere Einsetzöffnungen 46 für die Rasteinrichtung 33 vorgesehen sein, um auch bei beengten Raumverhältnissen eine gute Zugänglichkeit für die Demontage zu erreichen.

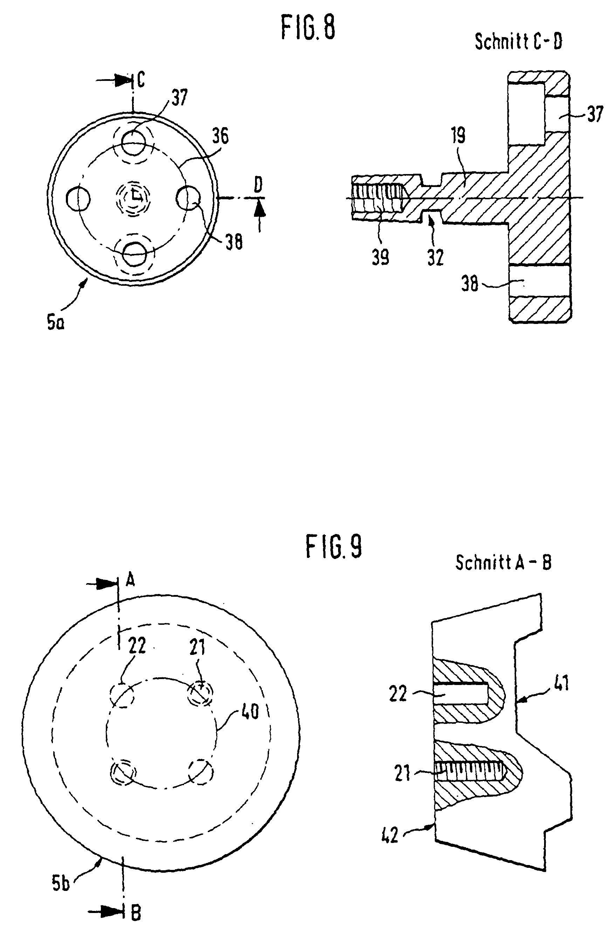

Figur 8 zeigt das Aufnahmeteil 5a im Detail. Auf einem Teilkreis 36 finden sich paarweise gegenüberliegend Durchgangsbohrungen 37 für Schrauben bzw. Durchgangsbohrungen 38 für Paßstifte. Am Endabschnitt des Stiftes 19 ist eine zusätzliche Gewindebohrung 39 vorgesehen.

Das Anlageteil 5b gemäß Figur 9 ist mit einem dem Teilkreis 36 entsprechenden Teilkreis 40 versehen, auf dem jeweils zwei Gewindebohrungen 21 und Paßbohrungen 22 angeordnet sind. Die Rückseite des Anlageteils 5b weist eine Kontur 41 auf, die der Kontur des nachzubildenden Fahrzeugteils angepaßt ist, um in allen Bereichen etwa gleiche Wandstärken für den Modellwerkstoff zu erzielen. Ist das Anlageteil 5b an einem Fahrzeugteil direkt angeordnet, beispielsweise durch Verklebung, so muß die Kontur 41 exakt der Form des Fahrzeugteils entsprechen. Die dem Aufnahmeteil 5a zugewaandte Anlagefläche 42 ist ebenflächig begrenzt.

Bei der Herstellung eines Modells 8 werden die Anlageteile 5b unter Beachtung des Rasters R an denjenigen Stellen des Modells 8 angeordnet, die sich hierfür in besonderer Weise eignen. Zur Aufspannung des Modells 8 werden zunächst die benötigten Befestigungsfüße 2 mit dem Grundrahmen 7 verschraubt. Anschließend werden die entsprechenden Verbindungsteile 3 mit ihren Nutensteinen 14 in die Nuten 13 des Befestigungsfußes 2 eingesetzt, über Paßstifte in den Bohrungen 15 und 16 in der zweiten Raumrichtung festgelegt und mit dem Befestigungsfuß 2 über die Gewindebohrung 12 verschraubt. Danach werden die Adapter 4 auf die Verbindungsteile 3 aufgesetzt und mit diesen verschraubt. Nunmehr kann das Modell 8 mit seinen Anlageteilen 5b, auf die die Aufnahmeteile 5a mit ihren abstehenden Stiften 19 aufgeschraubt wurden, ohne Zuhilfenahme weiteren Werkzeuges in die Adapter 4 eingesteckt werden. Durch die Rasteinrichtungen 33 werden die Stifte 19 in den Adaptern 4 arretiert.

In gleicher Weise kann ein Modell 8 auch auf die Aufspannplatte einer Werkzeugmaschine mit demselben Raster R aufgesetzt werden. Die Verschraubung über die zusätzliche Gewindebohrung 39 gewährleistet während der mechanischen Bearbeitung eine belastbare und spielfreie Verbindung zwischen Modell 8 und Verbindungsteil 3.

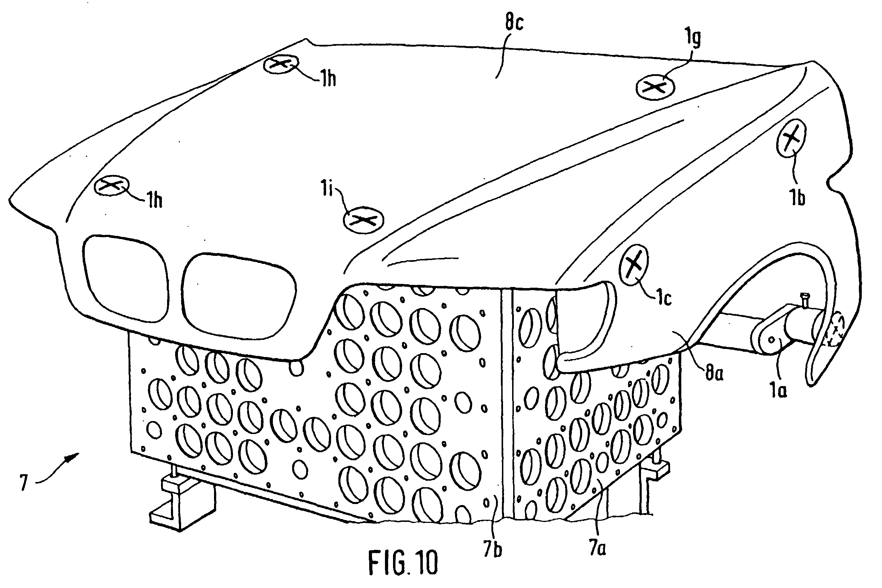

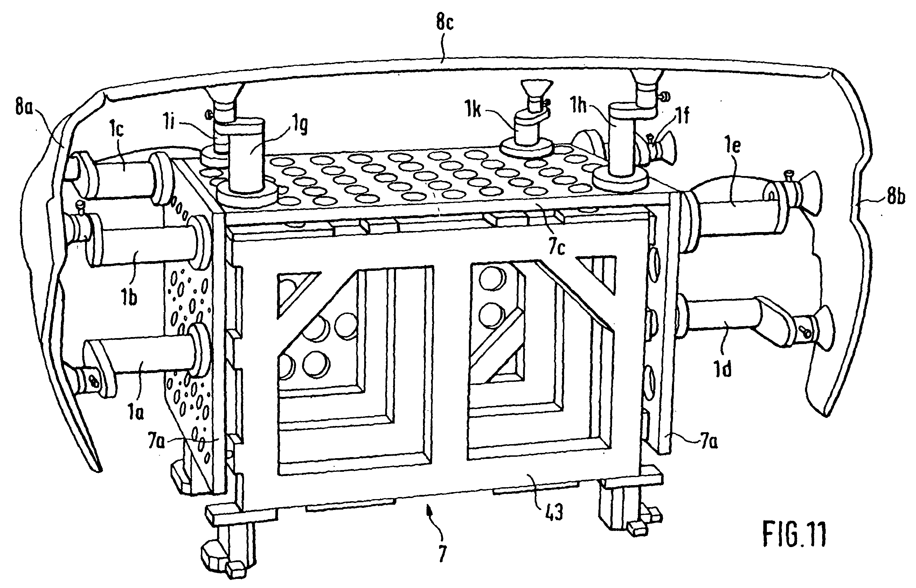

Die Figuren 10 und 11 zeigen ein erstes Anwendungsbeispiel der Erfindung. Auf einen Grundrahmen 7, der aus zwei vertikalen Seitenteilen 7a, einem vertikalen Vorderteil 7b sowie einem horizontalen Oberteil 7c besteht, sind insgesamt zehn Befestigungseinrichtungen 1a bis 1k angeordnet. Die einzelnen Teile 7a, b, c des Grundrahmens 7 sind mit einem massiven Tragrahmen 43 verschraubt. Die Befestigungseinrichtungen 1a bis 1c nehmen das Modell 8a eines linken Kotflügels auf. Entsprechend ist das Modell 8b des rechten Kotflügels an Befestigungseinrichtungen 1d bis 1f angeordnet. Das Modell 8c der Frontklappe schließlich ist über die Befestigungseinrichtungen 1g bis 1k befestigt. Abweichend von der Darstellung der Figur 11 können die Befestigungseinrichtungen 1a oder 1b bzw. 1d und 1e ohne weiteres auch zu einer einzigen Befestigungseinrichtung zusammengefaßt werden, die über ein entsprechend gestaltetes Verbindungsteil 3 zwei Aufnahmen 5 am Modell 8a bzw. 8b bedient.

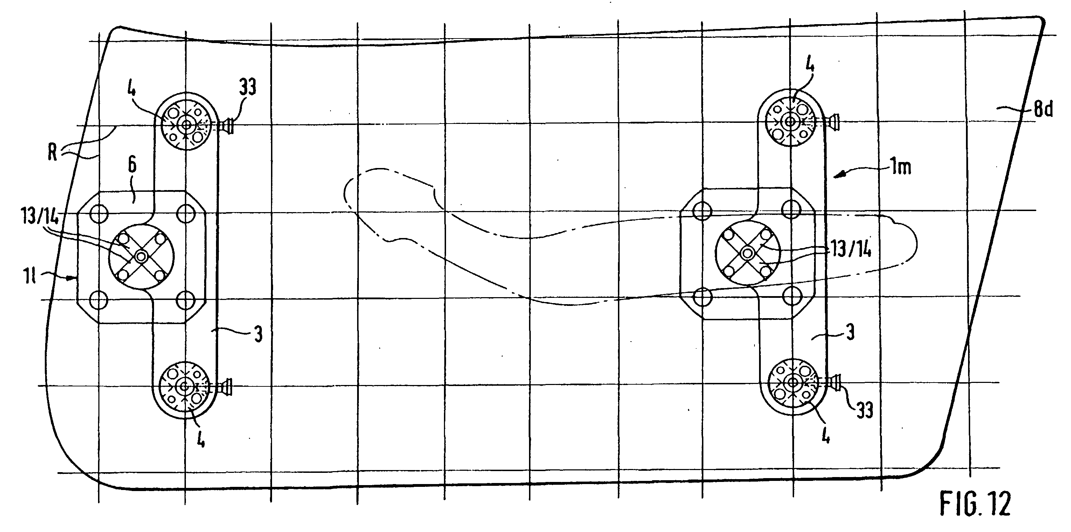

Figur 12 zeigt ein zweites Ausführungsbeispiel der Erfindung. Das Modell 8d einer Türinnenverkleidung ist über zwei Befestigungseinrichtungen 1l und 1m an einem nicht näher dargestellten Grundrahmen angeordnet. Die Befestigung erfolgt über zwei Verbindungsteile 3, die jeweils zwei Adapter 4 aufnehmen. Aus Figur 12 gehen insbesondere die Rasteinrichtungen 33 sowie die Nuten 13 bzw. die Nutensteine 14 hervor.

Die Figuren 10 und 11 geben ein Beispiel für einen Außencubing. In diesem Fall werden Außenhautteile bzw. Modelle davon an einen innenseitigen Grundrahmen angeordnet. Demgegenüber stellt Figur 12 ein Beispiel für das Innencubing dar, bei dem ein Innenverkleidungsteil bzw. ein Modell davon an einem Grundrahmen angeordnet ist. Im Fall der Figur 12 werden beispielsweise die Übergänge im vorderen Bereich der Türinnenverkleidung zur Instrumentafel hinsichtlich der optischen Wirkung und der Spaltmaße abgestimmt.

## Patentansprüche

1. Abstimmvorrichtung für Fahrzeugteile, mit einem Grundrahmen (7) mit einer Vielzahl von in regelmäßigem Raster (R) am Grundrahmen verteilten Befestigungspunkten für wenigstens eine Befestigungseinrichtung (1), die einen am Grundrahmen anbringbaren Befestigungsfuß (2) und einen Adapter (4) aufweist, der mit einer Aufnahme (5) am Fahrzeugteil zusammenwirkt,
**dadurch gekennzeichnet, dass** zwischen Befestigungsfuß (2) und Adapter (4) ein Verbindungsteil (3) angeordnet ist, das immer einen Versatz des Adapters (4) quer zur Längsachse des Befestigungsfußes (2) entsprechend dem Raster (R) des Grundrahmens (7) erzeugt.

2. Vorrichtung nach Anspruch 1,
**dadurch gekennzeichnet, dass** das Verbindungsteil (3) zur Verbindung mit wenigstens zwei Adaptern (4) ausgebildet ist.

3. Vorrichtung nach einem der vorangegangenen Ansprüche,
**dadurch gekennzeichnet, dass** der Befestigungsfuß (2) und/oder der Adapter (4) in unterschiedlichen, abgestuften Höhen bzw. Dicken zur Erzeugung veränderbarer Abstände der Aufnahmen (5) gegenüber dem Grundrahmen (7) vorgesehen sind.

4. Vorrichtung nach einem der vorangegangenen Ansprüche,
**dadurch gekennzeichnet, dass** der Befestigungsfuß (2) an seinem dem Grundrahmen (7) abgewandten Endabschnitt (11) eine mit dem Verbindungsteil (3) zusammenwirkende Formschluss erzeugende Einrichtung (13, 14) aufweist, die das Verbindungsteil (3) in einer oder mehreren festgelegten Positionen gegenüber dem Befestigungsfuß (2) ausrichtet.

5. Vorrichtung nach einem der vorangegangenen Ansprüche,
**dadurch gekennzeichnet, dass** das Verbindungsteil (3) an seinem dem Befestigungsfuß (2) abgewandten Endabschnitt eine mit dem Adapter (4) zusammenwirkende Formschluss erzeugende Einrichtung (27) aufweist, die den Adapter (4) in einer oder mehreren festgelegten Positionen gegenüber dem Verbindungsteil (3) ausrichtet.

6. Vorrichtung nach einem der vorangegangenen Ansprüche,
**dadurch gekennzeichnet, dass** die Aufnahme (5) mit dem Adapter (4) aufhebbar verrastbar ist.

7. Vorrichtung nach einem der vorangegangenen Ansprüche,
**dadurch gekennzeichnet, dass** die Aufnahme (5) mit dem Adapter (4) und/oder Verbindungsteil (3) verschraubbar ist.

8. Vorrichtung nach einem der vorangegangenen Ansprüche,
**dadurch gekennzeichnet, dass** die Aufnahme (5) einen stiftartigen Fortsatz (19) aufweist, der in den Adapter (4) einsetzbar ist.

9. Vorrichtung nach einem der vorangegangenen Ansprüche,
**dadurch gekennzeichnet, dass** die Aufnahme (5) aus einem adapterseitigen Aufnahmeteil (5a) und einem damit verschraubbaren fahrzeugseitigen Anlageteil (5b) besteht.

10. Vorrichtung nach einem der vorangegangenen Ansprüche,
**dadurch gekennzeichnet, dass** der Grundrahmen (7) wenigstens zwei senkrecht zueinander verlaufende Befestigungsebenen (7a, b, c) aufweist.

11. Vorrichtung nach Anspruch 10,
**dadurch gekennzeichnet, dass** der Grundrahmen (7) quaderförmig ist.

12. Vorrichtung nach einem der vorangegangenen Ansprüche,
**dadurch gekennzeichnet, dass** der Adapter (4) und/oder die Aufnahme (5a) in unterschiedlichen, abgestuften Dicken zur Erzeugung veränderbarer Abstände des Anlageteils (5b) gegenüber dem Grundrahmen (7) vorgesehen sind.

13. Verwendung einer Abstimmvorrichtung für Fahrzeugteile nach einem der vorangegangenen Ansprüche zur Aufnahme von Modellen (8) der Fahrzeugteile, wobei die Modelle (8) aus einer Tragstruktur sowie einer spanend bearbeitbaren Schicht aus Modellwerkstoff bestehen.

14. Verwendung nach Anspruch 13,
**dadurch gekennzeichnet, dass** die Tragstruktur aus einer inneren und einer äußeren Kohlefaserschicht mit dazwischen angeordneter Abstandsschicht und/oder Verstärkungseinlagen besteht, wobei an der inneren Kohlefaserschicht wenigstens eine mit dem Adapter (4) zusammenwirkende Aufnahme (5) vorgesehen ist.

15. Verwendung nach Anspruch 13,
**dadurch gekennzeichnet, dass** die Tragstruktur von einem Metallblech mit daran angeordneten Verstärkungen gebildet wird.

## Claims

1. A device for adjusting parts of vehicles, comprising a base frame (7) with a number of fastening points, distributed in a regular grid (R) on the base frame, for at least one fastening device (1) having an adapter (4) and a foot (2) for attaching to the base frame, the adapter co-operating with a receiver (5) on the vehicle part,
**characterised in that** a connecting part (3) is disposed between the foot (2) and the adapter (4) and always displaces the adapter (4) transversely to the longitudinal axis of the foot (2) in accordance with the grid (R) on the base frame (7).

2. A device according to claim 1,
**characterised in that** the connecting part (3) is formed with at least two adapters (4) for connecting.

3. A device according to any of the preceding claims,
**characterised in that** the foot (2) and/or the adapter (4) are provided in different graduated heights or thicknesses for varying the distance between the receivers (5) and the base frame (7).

4. A device according to any of the preceding claims,
**characterised in that** the foot (2), at its end portion (11) remote from the base frame (7), has a device (13, 14) producing a positive engagement and co-operating with the connecting part (3) and aligning the connecting part (3) in one or more fixed positions relative to the foot (2).

5. A device according to any of the preceding claims,
**characterised in that** the connecting part (3), at its end portion remote from the foot (2), has a device (27) producing a positive engagement and co-operating with the adapter (4) and aligning the adapter (4) in one or more fixed positions relative to the connecting part (3).

6. A device according to any of the preceding claims,
**characterised in that** the receiver (5) is lockable so that it can lifted off the adapter (4).

7. A device according to any of the preceding claims,
**characterised in that** the receiver (5) is screwable to the adapter (4) and/or connecting part (3).

8. A device according to any of the preceding claims,
**characterised in that** the receiver (5) has a pin-like projection (19) for inserting in the adapter (4).

9. A device according to any of the preceding claims,
**characterised in that** the receiver (5) comprises a receiver part (5a) on the same side as the adapter and an installation part (5b) on the same side as the vehicle and screwable to the part (5a).

10. A device according to any of the preceding claims,
**characterised in that** the base frame (7) has at least two fastening planes (7a, b, c) extending at right angles to one another.

11. A device according to claim 10,
**characterised in that** the base frame (7) is square.

12. A device according to any of the preceding claims,
**characterised in that** the adapter (4) and/or the receiver (5a) are provided in different graduated thicknesses for varying the distance of the installation part (5b) from the base frame (7).

13. Use of a device for adjusting parts of vehicles according to any of the preceding claims, for holding models (8) of vehicle parts, wherein the models (8) comprise a bearing structure and a machinable layer of model material.

14. Use according to claim 13,
**characterised in that** the bearing structure comprises an inner and an outer carbon fibre layer and a spacing layer and/or reinforcing inserts in between, wherein at least one receiver (5) co-operating with the adapter (4) is provided on the inner carbon fibre layer.

15. Use according to claim 13,
**characterised in that** the bearing structure is in the form of a metal sheet with reinforcements disposed on it.

## Revendications

1. Dispositif de positionnement de pièces de véhicule comprenant un châssis de base (7), un grand nombre de points de fixation répartis sur le châssis de base suivant une trame régulière (R) pour au moins une installation de fixation (1) comprenant un pied de fixation (2) qui est destiné à être relié au châssis de base et un adaptateur (4) coopérant avec un organe de réception (5) de la pièce de véhicule,
**caractérisé par**
une pièce de liaison (3) prévue entre le pied de fixation (2) et l'adaptateur (4), cette pièce créant toujours transversalement à l'axe longitudinal du pied de fixation (2) un décalage de l'adaptateur (4) correspondant à la trame (R) du châssis de base (7).

2. Dispositif selon la revendication 1,
**caractérisé en ce que**
la pièce de liaison (3) est conçue pour être reliée à au moins deux adaptateurs (4).

3. Dispositif selon l'une quelconque des revendications précédentes,
**caractérisé en ce que**
le pied de fixation (2) et/ou l'adaptateur (4) sont prévus par rapport au châssis de base (7) à des hauteurs ou des épaisseurs différentes, étagées pour créer des distances variables pour les organes de réception (5).

4. Dispositif selon l'une quelconque des revendications précédentes,
**caractérisé en ce que**
le pied de fixation (2) comporte au niveau de son segment d'extrémité (11) à l'opposé du châssis de base (7), une installation (13, 14) qui crée une liaison par la forme coopérant avec la pièce de liaison (3), et qui aligne la pièce de liaison (3) dans une ou plusieurs positions fixes par rapport au pied de fixation (2).

5. Dispositif selon l'une quelconque des revendications précédentes,
**caractérisé en ce que**
la pièce de liaison (3) comporte au niveau de son segment d'extrémité à l'opposé du pied de fixation (2), une installation (27) qui crée une liaison par la forme coopérant avec l'adaptateur (4), et qui aligne l'adaptateur (4) dans une ou plusieurs positions fixées par rapport à la pièce de liaison (3).

6. Dispositif selon l'une quelconque des revendications précédentes,
**caractérisé en ce que**
l'organe de réception (5) peut être accroché de manière amovible à l'adaptateur (4).

7. Dispositif selon l'une quelconque des revendications précédentes,
**caractérisé en ce que**
l'organe de réception (5) est vissé à l'adaptateur (4) et/ou à la pièce de liaison (3).

8. Dispositif selon l'une quelconque des revendications précédentes,
**caractérisé en ce que**
l'organe de réception (5) comporte un prolongement (19) en forme de broche qui se place dans l'adaptateur (4).

9. Dispositif selon l'une quelconque des revendications précédentes,
**caractérisé en ce que**
l'organe de réception (5) se compose d'une pièce de réception (5a) du côté de l'adaptateur et d'une pièce d'appui (5b) du côté du véhicule qui peut être vissée à cette pièce de réception.

10. Dispositif selon l'une quelconque des revendications précédentes,
**caractérisé en ce que**
le châssis de base (7) comporte au moins deux plans de fixation (7a, b, c) perpendiculaires l'un par rapport à l'autre.

11. Dispositif selon la revendication 10,
**caractérisé en ce que**
le châssis de base (7) est cubique.

12. Dispositif selon l'une quelconque des revendications précédentes,
**caractérisé en ce que**
l'adaptateur (4) et/ou l'organe de réception (5a) ont des épaisseurs différentes, étagées pour créer des distances variables entre la pièce d'appui (5b) et le châssis de base (7).

13. Application d'un dispositif de positionnement de pièces de véhicule selon l'une quelconque des revendications précédentes pour recevoir des modèles (8) de pièces de véhicule, les modèles (8) se composant d'une structure de support et d'une couche qui peut être usinée par enlèvement de copeaux et réalisée en une matière pour modèle.

14. Application selon la revendication 13,
**caractérisée en ce que**
la structure de support se compose d'une couche de fibres de carbone intérieure et extérieure avec dans l'intervalle une couche d'écartement et/ou des inserts de renforcement, et la couche intérieure de fibres de carbone comporte au moins un organe de réception (5) coopérant avec l'adaptateur (4).

15. Application selon la revendication 13,
**caractérisée en ce que**
la structure de support est formée par une tôle métallique munie de renforcements.
